(19) **Europäisches Patentamt European Patent Office Office européen des brevets**

(11) **EP 2 210 059 B1**

(12) **FASCICULE DE BREVET EUROPEEN**

(45) Date de publication et mention
de la délivrance du brevet:
**02.09.2020 Bulletin 2020/36**

(21) Numéro de dépôt: **08839826.8**

(22) Date de dépôt: **17.10.2008**

(51) Int Cl.:
*G01C 11/06* (2006.01)   *H04N 5/232* (2006.01)

(86) Numéro de dépôt international:
**PCT/EP2008/064063**

(87) Numéro de publication internationale:
**WO 2009/050280 (23.04.2009 Gazette 2009/17)**

(54) **PROCEDE D'INTEGRATION D'UN SIGNAL VIBRATOIRE A PARTIR DE DIFFERENTIELLES DU SIGNAL ET PROCEDE CORRESPONDANT DE CORRECTION D'UN SIGNAL ACQUIS PAR UN CAPTEUR D'IMAGES**

VERFAHREN ZUM INTEGRIEREN EINES VIBRATIONSSIGNALS AUS SIGNALDIFFERENZEN UND ENTSPRECHENDES VERFAHREN ZUM KORRIGIEREN EINES DURCH EINEN BILDSENSOR ERFASSTEN SIGNALS

METHOD FOR INTEGRATING A VIBRATORY SIGNAL FROM SIGNAL DIFFERENTIALS, AND CORRESPONDING METHOD FOR CORRECTING A SIGNAL ACQUIRED BY AN IMAGE SENSOR

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **19.10.2007 FR 0758435**

(43) Date de publication de la demande:
**28.07.2010 Bulletin 2010/30**

(73) Titulaire: **Centre National d'Etudes Spatiales**
**75001 Paris (FR)**

(72) Inventeurs:
• **DE LUSSY, Françoise**
 **31000 Toulouse (FR)**
• **GROSS-COLZY, Lydwine**
 **31270 Cugnaux (FR)**
• **GRESLOU, Daniel**
 **31520 Ramonville Saint Agne (FR)**

(74) Mandataire: **Delorme, Nicolas et al**
**Cabinet Germain & Maureau**
**12, rue Boileau**
**BP 6153**
**69466 Lyon Cedex 06 (FR)**

(56) Documents cités:
**FR-A- 2 899 344**

• **ALMANSA A ET AL: "Irregular sampling in satellite images and reconstruction algorithms" 35ÈME CONGRÉ D'ANALYSE NUMÉRIQUE 2003 (CANUM 2003), 2-6 JUIN 2003, LANGUEDOC, FRANCE, [Online] 2 juin 2003 (2003-06-02), pages 1-27, XP002492689 Extrait de l'Internet: URL:http://www.fing.edu.uy/~almansa/HDR/Al mansa2003-CANUM-psample.pdf> [extrait le 2008-08-19]**
• **ROQUES S ET AL: "Satellite attitude instability effects on stereo images" PROCEEDINGS OF 2004 IEEE INTERNATIONAL CONFERENCE ON ACOUSTICS, SPEECH, AND SIGNAL PROCESSING (ICASSP ' 04), 17-21 MAI 2004, MONTREAL, QUEBEC, CANADA, vol. 3, 17 mai 2004 (2004-05-17), pages 477-480, XP010718230 ISBN: 978-0-7803-8484-2**
• **JANSCHEK K ET AL: "Integrated camera motion compensation by real-time image motion tracking and image deconvolution" PROCEEDINGS OF 2005 IEEE/ASME INTERNATIONAL CONFERENCE ON ADVANCED INTELLIGENT MECHATRONICS, 24-28 JUILLET 2005, MONTEREY, CA, USA, 24 juillet 2005 (2005-07-24), pages 1437-1444, XP010837963 ISBN: 978-0-7803-9047-8**

• de Lussy F et al: "Process line for geometrical image correction of disruptive microvibrations", Proceedings of XXIst ISPRS Congress, 3-11 July 2008, Beijing, China, 3 July 2008 (2008-07-03), pages 27-34, XP55025715, Retrieved from the Internet: URL:http://www.isprs.org/proceedings/XXXVII/congress/1_pdf/05.pdf [retrieved on 2012-04-26]

**Description**

**DOMAINE TECHNIQUE GENERAL**

L'invention concerne un procédé d'intégration pour obtenir un signal vibratoire harmonique ou quasi-harmonique issu d'un capteur d'images à partir d'au moins une mesure représentative d'une différentielle dudit signal vibratoire, ledit signal vibratoire étant composé de n pulsations $\omega_i$ stationnaires ou quasi-stationnaires connues.

L'invention concerne également un procédé correspondant de correction d'un signal acquis par un capteur d'images.

**ETAT DE L'ART**

Une solution classique pour intégrer un signal harmonique ou quasi-harmonique stationnaire ou quasi-stationnaire consiste à passer dans l'espace fréquentiel (par exemple par transformée de Fourier) et à appliquer un filtre qui dépend du pas d'intégration. Cette solution classique est décrite par exemple dans FR 2 899 344.

Mais cette solution mathématiquement simple pose des problèmes de mise en œuvre opérationnelle, dès lors que l'échantillonnage du signal est irrégulier ou présente un mitage.

De plus, elle présente des fréquences de coupures, multiples du pas d'intégration, rendant impossible la restitution de certaines fréquences sans une phase d'itération longue et fastidieuse.

Enfin, cette solution classique s'applique après observation de tout le signal : l'intégration ne peut pas être locale.

FR 2 899 344 divulgue par ailleurs une solution pour intégrer un bruit de très basse fréquence, en utilisant une modélisation polynomiale du signal, et en utilisant tous les échantillons temporels du signal disponibles après observation de tout le signal, pour modéliser les coefficients du polynôme temporel, par moindres carrés.

Cette modélisation n'est cependant valable que pour des signaux de très basse fréquence, pour lesquels une approximation polynomiale n'est pas trop fausse, et ne permet pas l'intégration des signaux quasi-harmoniques stationnaires ou quasi-stationnaires.

**PRESENTATION DE L'INVENTION**

L'invention propose de pallier au moins un de ces inconvénients. Elle est définie dans les revendications.

L'invention présente de nombreux avantages.

L'invention permet principalement d'intégrer un signal vibratoire dans l'espace temporel, à condition que l'on dispose de plusieurs mesures de différentielles du signal.

La solution exacte, dans le cas d'un signal vibratoire harmonique stationnaire, est une combinaison linéaire de deux fois plus de différentielles que de pulsations présentes dans le signal vibratoire.

Dans le cas où le signal est uniquement quasi-harmonique quasi-stationnaire, une solution approchée est possible, sous forme également de combinaison linéaire.

La solution approchée est obtenue par approximation par les moindres carrés.

Elle permet de restituer les fréquences principales du signal et de tenir compte du bruit de mesure.

L'invention ne nécessite pas de prétraitement du signal (de type transformée de Fourier).

Une fois les coefficients linéaires calculés, grâce à une précalibration, l'invention permet une restitution point par point (c'est-à-dire à chaque instant) du signal recherché. Il n'est pas nécessaire d'observer tout le signal : l'intégration est locale, en d'autres termes elle s'effectue en temps réel.

Les coefficients linéaires sont des constantes indépendantes du temps et de la prise de vue.

L'intervalle sur lequel sont effectuées les mesures de différentielles est très étroit : en général il suffit d'avoir un à six échantillons consécutifs très proches (exemple : 1ms), pour pouvoir effectuer une intégration à un instant t compris dans l'intervalle précité.

L'invention permet une intégration d'un signal composé d'harmoniques notamment hautes fréquences et très hautes fréquences.

L'invention ne présente pas de fréquences de coupure si l'on combine des différentielles indépendantes. Une itération est possible dans certains cas pour améliorer la précision des résultats, mais n'est aucunement nécessaire.

L'échantillonnage du signal peut être irrégulier ou présenter un mitage.

L'invention est applicable à la correction de la partie vibratoire d'un signal acquis par un capteur d'images monté sur un porteur. Des exemples non limitatifs de cette correction sont notamment l'amélioration de la qualité des images acquises par des microscopes et les appareils de photographie à très fort grossissement, la stabilisation de la ligne de visée d'un aéronef (par exemple un hélicoptère en vol et observant un environnement) ou la restitution d'attitudes satellitaires résiduelles (roulis, tangage ou lacet) à partir de mesures d'écarts d'attitude entre les différentes images successivement prises par un capteur embarqué sur le satellite.

Pour les microscopes et les appareils de photographie, les méthodes habituelles de moyennage d'un grand nombre d'images du même objet enlèvent la vibration en créant un léger flou sur les contours. Cependant, l'application d'un procédé selon l'invention - en utilisant au moins deux images acquises par un appareil de photo ou un microscope: une première image de référence et une seconde, du même objet - permet de corriger la déformation de l'image sans le flou précité.

De plus, à partir d'un ensemble d'images acquises à des instants légèrement différents par un satellite, l'invention permet notamment de déterminer automatiquement les profils d'attitude haute fréquence permettant de corriger la géométrie des images.

## PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- La figure 1 représente schématiquement un capteur d'images embarqué sur un satellite ;
- La figure 2 représente schématiquement un capteur d'images dans un microscope ;
- Les figures 3A et 3B représentent schématiquement les images prises par le capteur de la figure 1 ;
- La figure 4 représente schématiquement un exemple de dispositif de mise en œuvre d'un procédé selon l'invention ; et
- La figure 5 représente schématiquement les principales étapes d'un procédé selon l'invention.

Sur l'ensemble des figures, les éléments similaires portent des références numériques identiques.

## DESCRIPTION DETAILLEE

## POSITION DU PROBLEME

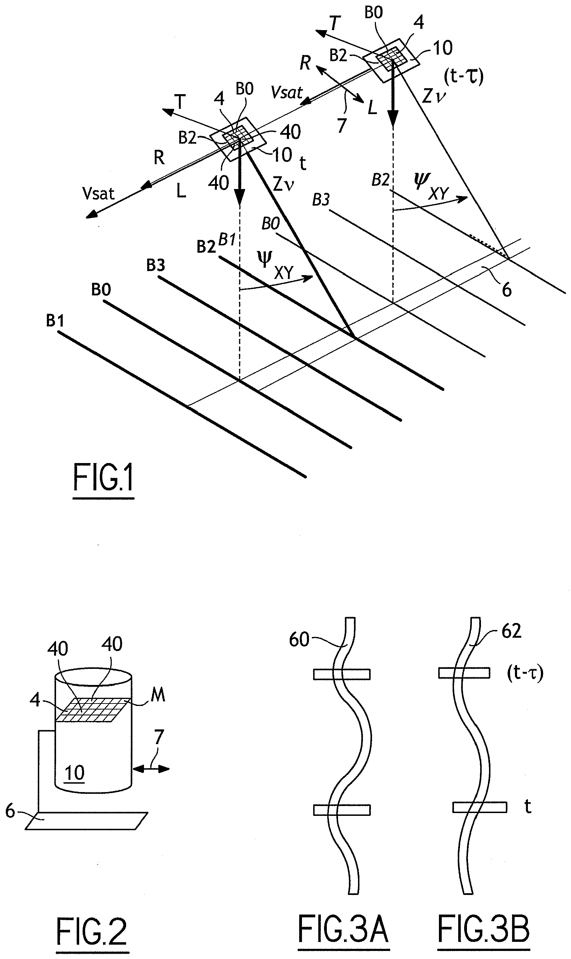

Les figures 1 et 2 représentent très schématiquement deux exemples non limitatifs d'un porteur 10 sur lequel est monté un capteur 4 d'images.

Dans la suite de la présente description, on montre que l'invention s'applique avantageusement à un porteur 10 du type satellite artificiel se déplaçant par rapport à une scène 6 (exemple de la figure 1). On souhaite souligner que l'invention s'applique à d'autres types de porteurs 10, notamment quasi-statiques par rapport à la scène 6 à observer, par exemple du type microscope (exemple de la figure 2).

Dans tous les cas, le capteur 4 comporte :

soit une pluralité de barrettes B0, B1, B2, B3 (la figure 1) par exemple monobandes ou hyperspectrales; soit une matrice M de détection (figure 2), ou un autre type de capteur, comme par exemple des capteurs.

Les barrettes et la matrice comportent des pixels 40 permettant de former au moins une image de la scène 6 à observer.

De façon générale, les images acquises par un satellite d'observation de la Terre présentent des déformations géométriques liées au mouvement orbital du satellite, à son attitude, à la géométrie interne de l'instrument, et au relief de la scène observée.

Afin de connaître la position de chaque pixel 40 de l'image dans un référentiel conventionnel (géographique ou cartographique), on utilise classiquement un modèle géométrique de prise de vue basé sur deux ensembles de données :

1. L'étalonnage du modèle : ce sont l'orientation des différents repères utiles (instrument par rapport au satellite, senseurs d'attitude par rapport au satellite), les directions de visée des détecteurs, et les paramètres qui régissent les modèles, c'est à dire tout ce qui concerne la modélisation géométrique indépendamment d'une prise de vue particulière.

2. Les données auxiliaires de la prise de vue : ce sont des mesures effectuées systématiquement par des senseurs d'attitude absolues et/ou relatives, associées à des mesures de position (orbitographie) et de datation. Ces mesures sont échantillonnées dans le temps et disponibles pour chaque segment d'image acquis.

On utilise les données auxiliaires et l'étalonnage du modèle pour calculer à chaque instant l'orientation du repère de visée, et donc, pour chaque pixel 40, l'intersection de sa direction de visée avec la Terre.

Les données auxiliaires peuvent rendre compte de perturbations jusqu'à une fréquence de coupure, par exemple de l'ordre de 8 à 16 Hz.

Lorsque le satellite présente des perturbations d'attitude de plus haute fréquence, celles-ci ne sont donc pas restituées et dégradent la qualité de l'image de façon variable selon leur fréquence et leur amplitude, comme on l'explique dans la suite.

Lorsque le capteur 4 comporte des barrettes de détecteurs (cas de la figure 1) qui voient le paysage à des instants différents, les variations d'attitude du satellite sont observables dans une certaine mesure, puisqu'elles induisent des décalages de position d'un même détail du paysage entre les différentes images produites par les différentes barrettes.

Ainsi, la figure 1 montre que les barrettes B0 et B2 du satellite 10, par exemple, acquièrent une image de la scène 6 à un instant $t$-$\tau$ , puis une image de la scène 6 à un instant t, le satellite 10 s'étant déplacé entre les instants $t$-$\tau$ et $t$.

On a représenté à la figure 3A l'image 60 de la scène 6 vue par la barrette B0, et à la figure 3B l'image 62 de la scène 6 vue par la barrette B2. Du fait des vibrations 7 du satellite, on constate une différence de géométrie entre les images 60 et 62, ce qui provoque une déformation de l'image de la scène 6.

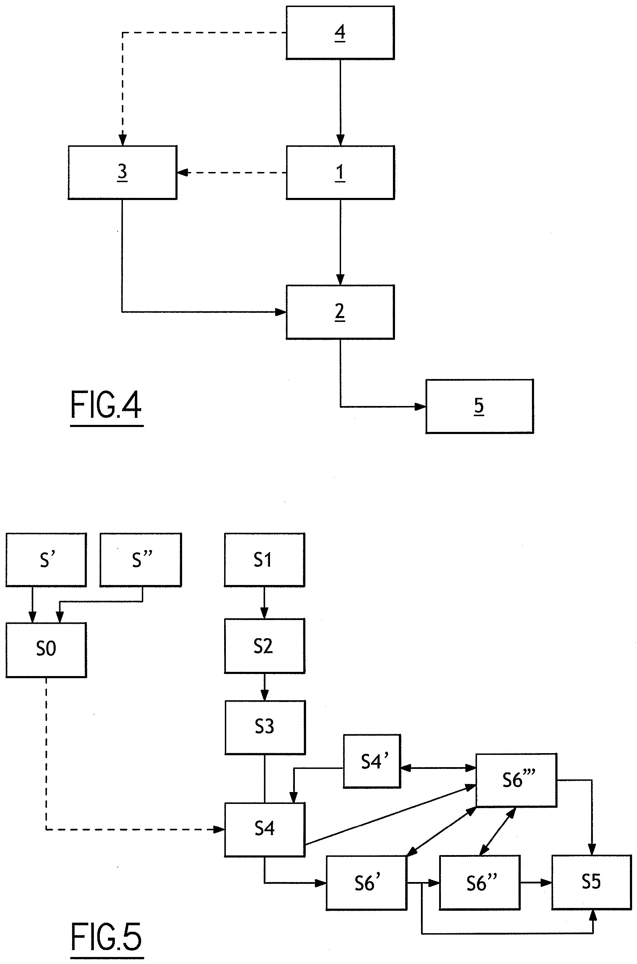

On cherche donc à caractériser les perturbations hautes fréquences non vues par les senseurs à bord, par traitement des images au sol ou éventuellement à bord, grâce au dispositif selon la figure 4. On peut alors envisager de restituer ces hautes fréquences à l'aide d'un traitement des images au sol ou à bord, afin de corriger les modèles géométriques.

La notion de haute fréquence est bien entendue relative aux perturbations attendues (au-delà des fréquences restituées par les senseurs) et aux grandeurs observables par le processus de mesure de décalage entre images (en deçà des fréquences associées à la mesure sur trois pixels 40). Dans le contexte d'un satellite d'observation de la Terre équipé de plusieurs détecteurs séparés dans le champ, on peut définir une liste de mesures de décalages adaptée à la connaissance a priori des perturbations recherchées (typiquement, si on sait que les fréquences perturbatrices sont dans un intervalle [fmin, fmax]).

Un tel phénomène de déformation de l'image de la scène par les vibrations 7 du porteur 10 est également possible dans le cas d'un télescope acquérant une scène 6 à des instants différents. En effet, lorsque de telles images sont acquises avec un fort grossissement optique, par exemple par un microscope ou un appareil de photographie, les vibrations de l'appareil de prise de vue ou de l'ensemble [objet + appareil de prise de vue], conduisent au même problème technique que celui des images satellites cité précédemment.

On souhaite donc trouver, à chaque instant t, la partie vibratoire d'un signal acquis par le capteur 4 d'images monté sur le porteur 10, pour éventuellement le corriger.

## OBTENTION DU SIGNAL VIBRATOIRE

On propose selon l'invention un procédé d'intégration pour obtenir un signal vibratoire harmonique ou quasi-harmonique issu d'un capteur d'images à partir d'au moins une mesure représentative d'une différentielle dudit signal vibratoire.

Le signal vibratoire est composé de n pulsations $\omega_i$ stationnaires ou quasi-stationnaires connues.

Comme on le verra dans la suite de la présente description, les $\omega_i$ dépendent généralement des propriétés vibratoires du porteur 10. C'est pour cette raison qu'elles sont connues.

Un dispositif de mise en œuvre d'un procédé selon l'invention comporte, comme le montre la figure 4, un module 1 de traitement des images issues du capteur 4, un intégrateur 2 d'intégration du signal issu du module 1, et un calculateur 3 permettant de calculer des coefficients qui seront utilisés par l'intégrateur 2.

Dans le cas d'un satellite 10, le module 1 de traitement, l'intégrateur 2, et le calculateur 3 peuvent être embarqués ou au sol. Dans le cas d'un microscope, le module 1, l'intégrateur 2, et le calculateur 3 peuvent être distants.

Comme le montre la figure 5, le procédé comporte principalement une étape S4 selon laquelle l'intégrateur 2 intègre le signal vibratoire $\hat{x}(t)$ en effectuant une combinaison linéaire de m mesures $\Delta\hat{x}(t_k, \tau_j)$ pour chaque instant $t_k$ issues du module 1.

La combinaison linéaire est de la forme :

$$\hat{x}(t) = \sum_{t_k \in I} \sum_{j=1}^{m} w_{jk} \cdot \Delta\hat{x}(t_k, \tau_j)$$

où $m \leq 2n$ ;
$t_k$ appartient à un intervalle I de temps incluant $t$ ; et
les m mesures sont prises entre l'instant $t_k$ et des instants $t_k$ -$\tau_j$ distants de décalages temporels $\tau_j$ connus.

Chaque coefficient $w_{jk}$ de la combinaison linéaire est une fonction des pulsations $\omega i$ connues, des décalages

$\tau_j$ connus, et de la position de la mesure $\Delta\hat{x}(t_k, \tau j)$ dans l'intervalle temporel I. Ils sont calculés par le calculateur 3 lors d'une étape de calibration S0.

Comme on le verra dans la suite de la présente description, les décalages temporels $\tau_j$ sont en général fonction des propriétés géométriques du capteur 4 et/ou d'un déplacement du porteur 10. C'est pour cette raison qu'ils sont connus.

On verra également dans la suite de la présente description que l'intervalle / est de la forme :

$$I = \left[ t - p'dt; t + pdt \right]$$

où dt est le pas d'échantillonnage des mesures $\Delta\hat{x}(t_k, \tau_j)$ par le module 1 ; et
les intervalles [0 ;p'] et [0 ;p] sont inclus dans les nombres entiers naturels.

## OBTENTION DES COEFFICIENTS LINEAIRES

Les développements qui suivent expliquent le calcul des coefficients $w_{jk}$ par le calculateur 3 lors d'une étape S0.

CAS D'UN SIGNAL VIBRATOIRE HARMONIQUE STATIONNAIRE

Formule d'obtention

Lorsque le signal vibratoire est considéré comme harmonique stationnaire, le calculateur 3 modélise le signal à intégrer sous la forme :

$$\hat{y}(t) = \sum_{i=1}^{n} a_i \cdot \sin(\omega_i t + \varphi_i)$$

où $a_i$ représente l'amplitude de la pulsation $\omega_i$, et $\varphi_i$ représente la phase de la pulsation $\omega_{\cdot i}$

Dans ce cas, le calculateur 3 pose :

$$p'=p=0 \text{ (et donc } t_k = t) ;$$

et

$$m=2n$$

Le calculateur 3 calcule alors, lors de l'étape S0, le vecteur w regroupant les coefficients $w_j$ de la combinaison linéaire par la formule :

$$\mathbf{w} = \left( \mathbf{B}(\omega, \tau)^{-1} \right)^H \cdot \alpha \quad \text{équation 1}$$

où : $(\mathbf{B}(\omega, \tau)^{-1})^H$ est la matrice transposée de la matrice $\mathbf{B}(\omega, \tau)^{-1}$
$\mathbf{B}(\omega, \tau)^{-1}$ est l'inverse de la matrice $\mathbf{B}(\omega, \tau)$,
$\mathbf{B}(\omega, \tau)$ est une matrice carrée m×m de la forme :

$$\begin{pmatrix} 1-e^{-i\omega_1\tau_1} & \cdots & 1-e^{-i\omega_n\tau_1} & 1-e^{i\omega_1\tau_1} & \cdots & 1-e^{i\omega_n\tau_1} \\ \vdots & & \vdots & \vdots & & \vdots \\ 1-e^{-i\omega_1\tau_m} & \cdots & 1-e^{-i\omega_n\tau_m} & 1-e^{i\omega_1\tau_m} & \cdots & 1-e^{i\omega_n\tau_m} \end{pmatrix}$$

a est une matrice colonne de m lignes ayant un coefficient 1

$$\boldsymbol{\alpha} = \begin{pmatrix} 1 \\ \vdots \\ 1 \end{pmatrix}$$

Une fois les coefficients $w_j$ calculés lors de l'étape S0 par le calculateur 3, il est possible de restituer le signal vibratoire $\hat{x}(t)$ à partir des m mesures $\Delta\hat{x}(t_k, \tau_j)$ issues du module 1, grâce à l'intégrateur 2 lors de l'étape S4.

Explication

Les développements qui suivent expliquent comment l'équation 1 est obtenue.
On a par convention de notation :

$$\sin(t) = \frac{1}{2i}\left(e^{it} - e^{-it}\right), \quad \text{avec } i^2 = -1$$

$A^H$ : matrice transposée de A
$\omega = 2\pi f$, où $f$ est la fréquence de la pulsation $\omega$

Par suite on a :

$$\boxed{\begin{aligned} \hat{y}(t) &= \sum_{i=1}^{n} \frac{a_i}{2i}\left(e^{i(\omega_i t + \varphi_i)} - e^{-i(\omega_i t + \varphi_i)}\right) \\ &= \boldsymbol{\alpha}^H \cdot \mathbf{v}(\boldsymbol{\alpha}, \omega, \varphi, t) \end{aligned}}$$

et :

$$\boxed{\begin{aligned} \Delta\hat{y}(t, \tau_j) &= \sum_{i=1}^{n} \frac{a_i}{2i}\left[\left(1 - e^{-i\omega_i \tau_j}\right)e^{i(\omega_i t + \varphi_i)} - \left(1 - e^{i\omega_i \tau_j}\right)e^{-i(\omega_i t + \varphi_i)}\right] \\ &= \boldsymbol{\beta}(\omega, \tau_j)^H \cdot \mathbf{v}(\boldsymbol{\alpha}, \omega, \varphi, t) \end{aligned}}$$

où $\mathbf{v}(\mathbf{a}, \omega, \varphi, t)$ est constitué des n composantes harmoniques du signal ($2 \times n$ coordonnées) :

$$\mathbf{v}(\mathbf{a}, \boldsymbol{\omega}, \boldsymbol{\varphi}, t) = \begin{pmatrix} \dfrac{a_1}{2i}e^{i(\omega_1 t+\varphi_1)} \\[2mm] \dfrac{a_2}{2i}e^{i(\omega_2 t+\varphi_2)} \\[1mm] \vdots \\[1mm] \dfrac{a_n}{2i}e^{i(\omega_n t+\varphi_n)} \\[2mm] -\dfrac{a_1}{2i}e^{-i(\omega_1 t+\varphi_1)} \\[2mm] -\dfrac{a_2}{2i}e^{-i(\omega_2 t+\varphi_2)} \\[1mm] \vdots \\[1mm] -\dfrac{a_n}{2i}e^{-i(\omega_n t+\varphi_n)} \end{pmatrix}$$

et où a et $\beta(\omega, \tau_j)$ pondèrent ces harmoniques pour générer les signaux $\widehat{y}(t)$ et $\Delta\widehat{y}(t,\tau_j)$ respectivement. Ces vecteurs ont donc également $2 \times n$ coordonnées.

On a:

$$\boldsymbol{\alpha} = \begin{pmatrix} 1 \\ \vdots \\ 1 \end{pmatrix} \qquad \text{et} \qquad \boldsymbol{\beta}(\boldsymbol{\omega}, \tau_j) = \begin{pmatrix} 1-e^{-i\omega_1\tau_j} \\ 1-e^{-i\omega_2\tau_j} \\ \vdots \\ 1-e^{-i\omega_n\tau_j} \\ 1-e^{i\omega_1\tau_j} \\ 1-e^{i\omega_2\tau_j} \\ \vdots \\ 1-e^{i\omega_n\tau_j} \end{pmatrix}$$

Notons que les coordonnées du vecteur $\beta(\omega,\tau_j)$ peuvent s'annuler dans le cas où il existe une fréquence harmonique de $1/\tau_j$ :

$$1-e^{\pm i\omega_i\tau_j} = 0 \quad \text{si } \omega_i\tau_j = (\text{nombre entier}) \times 2\pi$$

Ceci signifie que la différentielle $\Delta\widehat{y}(t,\tau_j)$ contient de l'information pour toutes les fréquences non harmoniques de $1/\tau_j$. Pour la suite du raisonnement, on suppose que :

$$\boxed{\exists\, i \text{ tel que } \omega_i\tau_j \neq (\text{nombre entier}) \times 2\pi, \quad \forall j = 1, \ldots, m}$$

Ainsi le vecteur $\beta(\omega, \tau_j)$ a au moins une coordonnée non nulle.

Les signaux $\widehat{y}(t)$ et $\Delta\widehat{y}(t,\tau_j)$ s'expriment tous deux en fonction du vecteur $\mathbf{v}(\mathbf{a}, \omega, \varphi, t)$.

On rappelle que

$$\boxed{m = 2 \times n}$$

alors on a :

$$\begin{pmatrix} \Delta\widehat{y}(t,\tau_1) \\ \Delta\widehat{y}(t,\tau_2) \\ \vdots \\ \Delta\widehat{y}(t,\tau_m) \end{pmatrix} = \begin{pmatrix} \boldsymbol{\beta}(\omega,\tau_1)^H \\ \boldsymbol{\beta}(\omega,\tau_2)^H \\ \vdots \\ \boldsymbol{\beta}(\omega,\tau_m)^H \end{pmatrix} \cdot \mathbf{v}(\mathbf{a},\omega,\varphi,t) = \mathbf{B}(\omega,\boldsymbol{\tau}) \cdot \mathbf{v}(\mathbf{a},\omega,\varphi,t)$$

où $\mathbf{B}(\omega, \tau)$ est une matrice carrée (de dimension m×m). Cette matrice est de la forme :

$$\begin{pmatrix} 1-e^{-i\omega_1\tau_1} & \cdots & 1-e^{-i\omega_n\tau_1} & 1-e^{i\omega_1\tau_1} & \cdots & 1-e^{i\omega_n\tau_1} \\ \vdots & & \vdots & \vdots & & \vdots \\ 1-e^{-i\omega_1\tau_m} & \cdots & 1-e^{-i\omega_n\tau_m} & 1-e^{i\omega_1\tau_m} & \cdots & 1-e^{i\omega_n\tau_m} \end{pmatrix}$$

Elle est inversible si son déterminant est non nul ou plus généralement si elle est bien conditionnée. On vérifie statistiquement, sur des milliers de tirages aléatoires de valeurs de $\omega_i\tau_j$ que :

1. lorsque n (le nombre de pulsations) est impair, il suffit qu'une seule harmonique en $1/\tau_j$ existe pour que la matrice soit mal conditionnée :

$$\boxed{\begin{array}{l} \text{si } n = 2k+1, \text{ avec } k \in \mathbf{N} \\ \text{et si } \exists\ \omega_i\tau_j \text{ tel que } \omega_i\tau_j \approx p\times 2\pi, \text{ avec } p \in \mathbf{N} \\ \text{alors } \det(\mathbf{B}(\omega,\boldsymbol{\tau})) \approx 0 \end{array}}$$

2. lorsque n est pair, s'il existe au moins une harmonique en $1/\tau_j$, alors la probabilité que la matrice $\mathbf{B}(\omega, \tau)$ soit inversible est au maximum de 50%, et diminue lorsque le nombre de termes $\omega_i\tau_j$ multiples de $2\pi$ augmente.

On suppose dans la suite que la matrice $\mathbf{B}(\omega, \tau)$ est bien conditionnée :

$$\boxed{\left| \det(\mathbf{B}(\omega,\boldsymbol{\tau})) \right| \gg 0}$$

On peut alors exprimer le vecteur des pulsations $\mathbf{v}(\mathbf{a}, \omega, \varphi, t)$ en fonction des m différentielles $\Delta\widehat{y}(t,\tau_j)$ :

$$\mathbf{v}(\mathbf{a},\omega,\varphi,t) = \mathbf{B}(\omega,\boldsymbol{\tau})^{-1} \cdot \begin{pmatrix} \Delta\widehat{y}(t,\tau_1) \\ \Delta\widehat{y}(t,\tau_2) \\ \vdots \\ \Delta\widehat{y}(t,\tau_m) \end{pmatrix}$$

et par suite :

$$\widehat{y}(t) = \boldsymbol{\alpha}^H \cdot \mathbf{B}(\boldsymbol{\omega},\boldsymbol{\tau})^{-1} \cdot \begin{pmatrix} \Delta\widehat{y}(t,\tau_1) \\ \Delta\widehat{y}(t,\tau_2) \\ \vdots \\ \Delta\widehat{y}(t,\tau_m) \end{pmatrix} = \mathbf{w}(\boldsymbol{\omega},\boldsymbol{\tau})^H \cdot \Delta\widehat{y}(t,\boldsymbol{\tau})$$

Soit

$$\boxed{\widehat{y}(t) = \sum_{j=1}^{2\times n} w_j \cdot \Delta\widehat{y}(t,\tau_j)}$$

Ainsi, à un instant t, un signal harmonique $\widehat{x}(t)$ composé de $n$ pulsations stationnaires peut s'exprimer comme une combinaison linéaire de 2×n dififérentielles $\Delta$ $\Delta\widehat{x}(t,\tau_j)$ issues du module 1.

Les coefficients $w_j$ dépendent des pulsations $\omega_i$ et des décalages $\tau_j$. Ils ne dépendent pas du temps (ils sont stationnaires). Pour pouvoir calculer $\widehat{x}(t)$ en fonction des mesures $\Delta\widehat{x}(t,\tau_j)$, il faut donc connaître les fréquences présentes sur le signal, pour obtenir les pulsations $\omega_i$ et les décalages $\tau_j$.

La détermination des pulsations $\omega_i$ et des décalages $\tau_j$ sera explicitée dans la suite de la présente description, sur un exemple concret.

Pour l'instant, si l'on sait par exemple que $\widehat{x}(t)$ est composé de deux fréquences telles que :

$$\frac{\boldsymbol{\omega}}{2\pi} = \begin{pmatrix} 46.80 \\ 78.00 \end{pmatrix}$$

et si on l'a comme conditions de mesure :

$$\boldsymbol{\tau} = \begin{pmatrix} 0.17000 \\ 0.02232 \\ 0.01488 \\ 0.00744 \end{pmatrix}$$

(ce qui correspond aux intervalles de temps en secondes entre les prises de vues des bandes spectrales de certains capteurs d'images), on a :

$$\frac{\boldsymbol{\tau} \cdot \boldsymbol{\omega}^H}{2\pi} = \begin{pmatrix} 7.9560 & 13.260 \\ 1.0446 & 1.7410 \\ 0.6964 & 1.1606 \\ 0.3481 & 0.5803 \end{pmatrix}$$

On voit que les termes $\omega_1\tau_1$ et $\omega_1\tau_2$ ne sont pas loin d'être des multiples de $2\pi$, (7.956×$2\pi$ et 1.0446×$2\pi$, respectivement), néanmoins la matrice $\mathbf{B}(\boldsymbol{\omega},\boldsymbol{\tau})$ est bien conditionnée (det($\mathbf{B}(\omega,\tau)$) = -16.6526).

Le calculateur 3 peut donc calculer les coefficients linéaires grâce à l'équation 1 :

$$\mathbf{w} = \begin{pmatrix} 0.0334 \\ 0.1483 \\ 0.3341 \\ 0.3474 \end{pmatrix}$$

A partir de ces coefficients, l'intégrateur 2 peut intégrer, à l'étape S4, les mesures $\Delta \hat{x}(t, \tau_j)$ issues du module 1 pour trouver $\hat{x}(t)$ :

$$\hat{x}(t) = \begin{pmatrix} 0.0334 & 0.1483 & 0.3341 & 0.3474 \end{pmatrix} \cdot \begin{pmatrix} \Delta \hat{x}(t, 0.1700) \\ \Delta \hat{x}(t, 0.0223) \\ \Delta \hat{x}(t, 0.0149) \\ \Delta \hat{x}(t, 0.0074) \end{pmatrix}$$

Les hypothèses permettant de calculer la solution algébrique sont néanmoins très fortes :

1. il faut absolument qu'il y ait deux fois plus de différentielles $\Delta \hat{x}(t, \tau_j)$ que de pulsations considérées,
2. il faut que la combinaison des décalages et des pulsations permettent l'inversion de la matrice **B**,
3. on ne peut ni tenir compte du bruit de mesure, ni d'une légère non-stationnarité des pulsations, ni d'une légère non-harmonicité du signal.

CAS D'UN SIGNAL VIBRATOIRE QUASI-HARMONIQUE QUASI-STATIONNAIRE

Formule d'obtention

Pour pallier les défauts de la solution algébrique, on peut approximer la solution w par moindres carrés en utilisant des données simulées.

On a déjà montré que le signal $\hat{x}(t)$ pouvait être approximé en fonction de plusieurs différentielles $\Delta \hat{x}(t, \tau_j)$ par une relation linéaire. On peut donc encore poser, même dans le cas quasi-harmonique quasi-stationnaire :

$$\hat{x}(t) = \begin{pmatrix} w_1 & \cdots & w_m \end{pmatrix} \cdot \begin{pmatrix} \Delta \hat{x}(t, \tau_1) \\ \vdots \\ \Delta \hat{x}(t, \tau_m) \end{pmatrix} = \mathbf{w}^H \cdot \Delta \hat{\mathbf{x}}(t, \boldsymbol{\tau})$$

Lorsque le signal est considéré comme quasi-harmonique et quasi-stationnaire, le calculateur 3 modélise le signal à intégrer sous la forme :

$$\hat{y}(t_k) = \sum_{i=1}^{n} (a_i + \varepsilon_a) \cdot \sin\left(\omega_i(t_k) \times t_k + \varphi_i\right)$$

où $(a_i + \varepsilon_a)$ représente l'amplitude de la pulsation $\omega_i$, et
$\varphi_i$ représente sa phase.

Dans ce cas, le calculateur 3 pose :

$$\omega_i(t_k) = 2\pi \cdot (f_i + v_i(t_k) + \varepsilon_f)$$

où $\varepsilon_a$ et $\varepsilon_f$ sont des variables aléatoires de moyenne nulle et de distribution gaussiennes, d'écarts types respectifs $\sigma_f$ et $\sigma_h$, tirées à chaque instant $t_k$, et
$v_i(t_k)$ représente la dérive temporelle de chaque fréquence $f_i$;

Par exemple, lorsqu'on se place dans le cas d'une dérive linéaire et de faible amplitude des fréquences, pour rester dans un cas quasi-stationnaire, le calculateur 3 pourra poser:

$$v_i(t) = 0.25 \times t - 0.001 \times f_i$$

Le calculateur 3 calcule le vecteur **w** regroupant les coefficients $w_{jk}$ de ladite combinaison linéaire, par la méthode des moindres carrés, par la formule :

$$\mathbf{w} = \mathbf{R}_{\Delta y}^{-1} \cdot \mathbf{r}_{\Delta y dy} \quad \text{équation 2}$$

où $\mathbf{R}_{\Delta y}^{-1}$ est l'inverse de la matrice $R_{\Delta y}$,

$\mathbf{R}_{\Delta y}$ est la matrice de variance-covariance de la matrice $\Delta \widehat{y}(t_k, \tau)$ regroupant les $m \times (p+p'+1)$ différentielles estimées, chacune étant de la forme :

$$\Delta \widehat{y}(t_k) = \widehat{y}(t_k) - \widehat{y}(t_k - \tau_j)$$

$\mathbf{r}_{\Delta y.dy}$ est le vecteur de corrélation croisée entre $\widehat{y}(t_k)$ et $\Delta \widehat{y}(t_k, \tau) \cdot {}_\Delta$

Le calculateur 3 calcule $\mathbf{R}_{\Delta y}$ et $\mathbf{r}_{\Delta y \cdot dy}$ grâce aux formules :

$$\mathbf{R}_{\Delta y} = E_t \left[ \Delta \widehat{y}(t_k, \tau) \cdot \Delta \widehat{y}(t_k, \tau)^H \right]$$

$$\mathbf{r}_{\Delta y \cdot dy} = E_t \left[ \Delta \widehat{y}(t_k, \tau) \cdot \widehat{y}(t_k) \right]$$

où $E_t$ désigne l'espérance mathématique sur $t_k$.
Comme on le verra dans la suite de la présente description, l'apport principal de la solution statistique par rapport à la solution algébrique vient de la prise en compte des bruits et des dérives des harmoniques, et de la possibilité d'aboutir à des solutions moins précises, mais plus stables et moins contraignantes que la solution algébrique.
En effet, de façon classique et connue de l'homme du métier, une solution par moindres carrés minimisera le poids d'une différentielle plus bruitée que les autres, et on peut même, comme on le verra, supprimer une ou plusieurs différentielles dans le calcul des coefficients. Le fait de supprimer des variables secondaires ou de simuler du bruit sur les données utilisées pour le calcul des coefficients est une des techniques couramment employées en statistique pour « régulariser » la solution, c'est-à-dire la stabiliser. En effet, ajouter du bruit ou enlever des variables revient au même qu'ajouter une contrainte sur la fonction de coût utilisée pour la régression.

OBTENTION DES PULSATIONS ET DES DECALAGES TEMPORELS

Obtention des pulsations

Pour obtenir les $\omega_i$ et calibrer le vecteur **w,** il faut effectuer une pré-analyse fréquentielle du porteur, lors d'une étape S', effectuée par le module 1 et le calculateur 3.
Ces connaissances a *priori* peuvent s'obtenir de différentes façons suivant la nature de l'application. Néanmoins, dans le cas où seules les différentielles $\Delta\hat{x}(t,\tau_j)$ issues du module 1 sont les mesures disponibles du phénomène, on peut toujours obtenir les pulsations par analyse harmonique, classique et connue de l'homme du métier, des différentielles $\Delta\hat{x}(t,\tau_j)$.

Cependant, comme déjà évoqué précédemment, les différentielles ne permettant pas de restituer les harmoniques de $1/\tau_j$. Il faut donc combiner l'analyse de différentielles à décalages $\tau_j$ indépendants pour résoudre le problème (e.g. $\tau_1/\tau_2$ = n avec n entier).

Dans des conditions opérationnelles, les différentielles $\Delta\hat{x}(t,\tau_j)$ seront mesurées de façon discrète par le module 1, si possible à des intervalles réguliers dt, et seront bruitées.

Aussi, les fréquences détectables (et donc restituables, dites principales) sont théoriquement inférieures à 1/(2dt) (fréquence de Nyquist), et leur amplitude doit être supérieure au rapport signal/bruit.

Les autres fréquences sont considérées comme secondaires. Les fréquences supérieures à 1/(2dt) sont repliées et polluent la restitution du signal, mais cela est dû à la discrétisation d'un signal continu, ce problème classique n'est pas traité ici.

Au premier ordre, c'est donc l'amélioration de la résolution de l'échantillonnage dt qui permet l'amélioration de l'estimation statistique.

Obtention des décalages temporels

Le décalage temporel $\tau_j$ résulte du mode de mesure des différentielles :

- pour une image sur un satellite dont le capteur comporte des barrettes, il s'agit du temps quasi-constant séparant l'acquisition du même paysage par deux barrettes ou groupes de barrettes différentes. Ce temps $\tau_j$ est défini par co-localisation entre ces barrettes ;
- pour un microscope, ainsi que pour un porteur avec un capteur matriciel, il s'agit du temps d'échantillonnage de l'image.

Par ailleurs, étant donné que la mesure et l'analyse du signal $\hat{x}(t)$ recherché se fait sur des différentielles $\Delta\hat{x}(t,\tau_j)$ de ce signal, ces dernières doivent être mesurées par le module 1 avec des décalages $\tau_j$ d'autant plus importants que le bruit de mesure est important (ou que rapport signal à bruit (RSB) est faible).

Ainsi, soit un petit décalage d$\tau$, localement on a :

$$\Delta\hat{x}(t, d\tau) = \frac{d\hat{x}}{dt} d\tau .$$

Et toujours localement, puisque $\hat{x}(t)$ est supposé harmonique :

$$\frac{d\hat{x}}{dt} \approx \sum_{i=1}^{n} a_i \omega_i .$$

Si on suppose que le bruit de mesure est normal d'écart type $\sigma_\Delta$, on veut :

$$\Delta\hat{x}(t, d\tau) > 3\sigma_\Delta ,$$

soit

$$dt > \frac{3\sigma_\Delta}{\sum\limits_{i=1}^{n} a_i\omega_i} \quad \text{ou} \quad dt > \frac{1}{RSB} \, .$$

Ainsi, le module 1 fournit les mesures $\Delta\hat{x}(t_k,\tau_j)$ de sorte que le plus petit décalage $\tau_j$ soit :

$$\tau_j > \frac{3\sigma_\Delta}{\sum\limits_{i=1}^{n} a_i\omega_i}$$

En théorie, Il n'y a pas de limite supérieure des décalages lorsque le signal est stationnaire. Si le signal est quasi-stationnaire, la limite supérieure des décalages dépend de la vitesse de dérive des fréquences.

En conditions opérationnelles cependant, il est fréquent que le bruit de mesure augmente avec le décalage. Il existe donc une limite supérieure des décalages due à l'instrumentation ou aux conditions de mesures.

Le module 1 fournit donc les mesures $\Delta\hat{x}(t_k,\tau_j)$ de sorte que les décalages temporels $\tau_j$ soient tels que les fréquences $f_i$ puissent être considérées comme quasi-stationnaires entre $t-\tau_j$ et $t$, malgré la dérive $v_i(t)$.

VARIANTES AVANTAGEUSES

Premièrement, et comme déjà évoqué plus haut, avantageusement, le calculateur 3 supprime, dans la combinaison linéaire lors de l'étape S0, les termes correspondant aux différentielles estimées $\Delta\hat{y}(t_k,\tau_j)$ (et donc aux mesures $\Delta\hat{x}(t_k,\tau_j)$) dont l'amplitude est inférieure à un seuil déterminé, et peut donc être considérée comme négligeable. Ce seuil est relatif à la moyenne des amplitudes des coefficients $w_{ik}$ et guidé par la différence entre la variance globale et la variance restituée par les variables non-éliminées ramenée au bruit.

Une fois que les termes négligeables ont été supprimés, une nouvelle étape S0 de calibration est effectuée pour redéterminer les coefficients de la combinaison linéaire.

L'intégrateur 2 effectue l'étape S4 d'intégration en utilisant les coefficients linéaires retenus.

Une telle régularisation par suppression de mesures est toujours possible. Néanmoins il faut rester avec un nombre de différentielles comprises égal ou supérieur au nombre de fréquences recherchées. Autrement dit, on ne peut pas chercher à restituer plus de fréquences que de différentielles disponibles.

La solution ainsi régularisée est plus stable, car une solution statistique régularisée présentera moins de fréquences de coupures.

La suppression de certaines mesures a un autre avantage : d'un point de vue opérationnel, la solution est moins contraignante, car on supprime au moins une mesure issue du module 1.

Deuxièmement et en lien avec ce qui vient d'être expliqué, une solution pour pallier le manque de mesures $\Delta\hat{x}(t,\tau_j)$ dont l'amplitude est supérieure au seuil précité, à un instant $t$, est de tenir compte des mesures à des instants proches de cet instant, sur l'intervalle $I$ précité.

Ainsi, avantageusement, lors de l'étape S0 de calcul des coefficients, le calculateur 3 prend, pour effectuer les calculs des coefficients $w_{jk}$, des mesures disponibles avec des décalages obtenus à des temps proches du temps $t$ sur l'intervalle $I$, avec

$$I = [t - p'\cdot dt; t + p \cdot dt]$$

pour améliorer la robustesse au bruit.

Le calculateur 3 pose avantageusement p'=p.

L'intégrateur 2 effectue alors, par exemple pour m décalages, à l'étape S4:

$$\widehat{x}(t) = \mathbf{w}^H \cdot \begin{pmatrix} \Delta\widehat{x}(t - p \cdot dt, \tau_1) \\ \vdots \\ \Delta\widehat{x}(t - p \cdot dt, \tau_m) \\ \vdots \\ \Delta\widehat{x}(t, \tau_1) \\ \vdots \\ \Delta\widehat{x}(t, \tau_m) \\ \vdots \\ \Delta\widehat{x}(t + p \cdot dt, \tau_1) \\ \vdots \\ \Delta\widehat{x}(t + p \cdot dt, \tau_m) \end{pmatrix} + \varepsilon_w$$

où $\varepsilon_w$ représente l'écart entre le modèle approché et la réalité.

Bien entendu, par souci de simplicité ou lorsqu'il y a suffisamment de mesures, le calculateur 3 peut poser:

$$\text{p'=p=0 (on a alors } t_k = t)$$

L'intégrateur 2 intègre alors le signal à l'instant t.

Troisièmement, le calculateur 3 peut simuler le bruit de mesure, lors de l'étape S0, en posant :

$$\Delta\widehat{y}(t_k, \tau_j) = \widehat{y}(t_k) - \widehat{y}(t_k - \tau_j) + \varepsilon_\Delta$$

où $\varepsilon_\Delta$ est de distribution gaussienne, de moyenne nulle et d'écart type $\sigma_\Delta$ tiré à chaque instant $t_k$.

La prise en compte, lors de l'étape S0 de calibration, de $\varepsilon_\Delta$ est avantageuse pour assurer la robustesse de la solution et relâcher les contraintes sur l'échantillonnage dt des mesures issues du module 1.

Le calculateur 3 pose par exemple $\sigma_\Delta = 0.1$ et maintient les autres incertitudes, par exemple $v_i(t)$, $\varepsilon_f$ et $\varepsilon_a$ (vues plus haut) égales à 0.

Par ailleurs, on le répète, dans des conditions opérationnelles, la solution approchée (statistique) est plus robuste que la solution algébrique, car elle permet de tenir compte de l'incertitude sur les fréquences analysées, d'une éventuelle quasi-stationnarité de ces fréquences, et du bruit de mesure des différentielles (éventuellement non indépendant).

Cependant, un procédé selon l'invention s'applique sur des signaux de moyenne nulle. Ainsi l'intégrateur 2 effectue préférentiellement, lors d'une étape S4', un centrage du signal vibratoire avant d'appliquer les coefficients $w_{jk}$ lors de l'étape S5, pour obtenir un signal de moyenne nulle.

De plus, les fréquences secondaires ou repliées ne sont pas correctement restituées. L'intégrateur 2 effectue donc préférentiellement, lors d'une étape S6', un filtrage sur le signal $\widehat{x}(t)$ pour s'affranchir du bruit de restitution et pour éliminer des fréquences peu observables.

En outre, les w sont calibrés sur une connaissance a *priori* des fréquences (moyenne, bruits, dérive). Les fréquences réelles du signal peuvent donc être légèrement différentes de la simulation pour le calcul des w. L'intégrateur 2 effectue donc avantageusement, lors d'une étape S6", un rephasage global du signal vibratoire $\widehat{x}(t)$ par minimisation d'erreur quadratique moyenne entre les mesures $\Delta\widehat{x}(t_k, \tau_y)$ issues du module 1 et les différentielles estimées $\Delta\widehat{y}(t_k, \tau_j)$ par le calculateur 3.

Enfin, dans le cas où la solution **w** a été obtenue avec régularisation par suppression de variables, on peut envisager un système itératif, lors d'une étape S6''', permettant de pallier le manque de précision de la solution. L'intégrateur 2 effectue alors une itération de la forme (les équations suivantes sont écrites ici avec un seul temps t par mesure de simplification de l'écriture) :

1. $\Delta\widehat{x}(t_k, \tau_j)$ = mesure initiale
2. $\widehat{x}(t_k) = \mathbf{w}^H \cdot (\Delta\widehat{x}(t_k, \tau))$
Puis, tant que $\Delta\widehat{x}(t_k, \tau_j) > 3\sigma_\Delta$, $\forall j \in [1, m]$

3. $\hat{\Delta x}(t_k, \tau_j) \Leftarrow \hat{\Delta x}(t_k,\tau_j) - (\hat{x}(t_k) - \hat{x}(t_k - \tau_j))$

4. $\hat{x}(t_k) \Leftarrow \hat{x}(t_k) + w^H \cdot (\hat{\Delta x}(t_k,\tau))$

Les itérations (S6''') incluent le centrage (S4'), l'éventuel filtrage (S6') et le rephasage (S6'').

EXEMPLES D'APPLICATIONS

On rappelle que dans le cas d'une recherche de la variation d'attitude haute fréquence d'un satellite, un procédé selon l'invention recherche un signal harmonique à plusieurs pulsations qui peuvent être bruitées (fréquences et amplitudes), à partir de mesures de décalage bruitées elles aussi.

Un exemple de procédé correction (on a vu dans la partie introductive que d'autres exemples d'applications sont possibles), à un instant, de la partie vibratoire d'un signal acquis par un capteur d'images monté sur un satellite comporte principalement les étapes suivantes :

1. Pré-analyse fréquentielle du satellite, lors d'une étape S', effectuée par le module 1 et le calculateur 3.

2. Initialisation des modèles géométriques (étape S'') par le calculateur 3 et le capteur 4 : cette étape consiste à utiliser le modèle géométrique du satellite avec la gamme des fréquences restituées par les senseurs bord pour prédire les décalages temporels attendus entre les images.

3. Calibration (étape S0), c'est-à-dire calcul, par le calculateur 3, des coefficients linéaires.

4. Acquisition des images par le capteur 4 (étape S1) : le capteur 4 acquiert m couples d'images d'une même scène, avec $1 \leq m \leq 2n$ . Une image de chaque couple est acquise à un instant $t_k$ appartenant à un intervalle / de temps incluant $t$, et l'autre image du couple est acquise à un instant $(t_k - \tau_j)$ distant du décalage temporel $\tau_j$ déterminé à l'étape S''.

5. Mesure de différences spatiales par corrélation inter-images par le module 1 (étape S2). L'étape S2 fournit, pour chaque couple d'images à traiter et déterminé à l'étape S1, les différences en ligne (dl) et en colonnes (de) non attendus sur une grille de points dont la densité est adaptée à la nature des perturbations et à la précision recherchées. En d'autres termes, le module 1 calcule, par corrélation à l'instant $t_k$ entre les images de chaque couple, m différences spatiales d'alignement de la scène entre les pixels des images de chaque couple.

Une opération de préparation permet d'éviter la corrélation sur certaines zones inefficaces pour la corrélation ou pour la pertinence des résultats (nuage ou mer).

Une opération de filtrage des mesures valides est mise en place pour sélectionner des données fiables.

6. Filtrage instantané par le module 1 pour transformer les différences spatiales d'alignement (dl, de) en différentielles d'attitude à corriger (étape S3) : à l'aide des modèles géométriques calculés lors de l'initialisation (étape S''), le module 1 calcule les différentielles d'attitude en roulis, tangage et lacet entre l'instant $t$ et chaque instant $(t - \tau_j)$. En d'autres termes, le module 1 transforme, grâce à un modèle géométrique, lesdites différences spatiales d'alignement en m différentielles d'attitude du porteur $\Delta x(t_k, \tau_j)$ prises entre l'instant $t_k$ et l'instant $(t_k - \tau_j)$. Cette étape est indépendante pour chaque couple inter-images.

On sait que les différentielles d'attitude sont à l'origine des décalages observés à chaque instant t sur un couple inter-images distant en moyenne de $\tau_j$ (voir les figures 3A et 3B).

7. Filtrage temporel pour que l'intégrateur 2 intègre les différentielles d'attitude $\Delta \hat{x}(t, \tau_j)$ issues du module 1 en attitudes absolues (étape S4) : l'étape S4 produit le profil d'attitude final à l'aide d'un modèle qui relie linéairement la liste des différentielles d'attitude de différents couples inter-images et la valeur absolue de l'attitude. Ce traitement est indépendant du type d'attitude (roulis, tangage ou lacet) du signal en entrée. En d'autres termes, l'intégrateur 2 intègre le signal vibratoire $\hat{x}(t)$ en effectuant une combinaison linéaire des m différentielles d'attitudes $\Delta \hat{x}(t_k,\tau_j)$ pour chaque instant $t_k$ issues du module 1, la combinaison linéaire étant de la forme :

$$\hat{x}(t) = \sum_{t_k \in I} \sum_{j=1}^{m} w_{jk} \cdot \Delta \hat{x}(t_k, \tau_j)$$

et chaque coefficient $w_{jk}$ de la combinaison linéaire étant une fonction des pulsations $\omega i$ connues, des décalages $\tau_j$ connus, et de la position de la mesure $\Delta \hat{x}(t_k, \tau_j)$ dans l'intervalle temporel I.

Un correcteur 5 (visible à la figure 4) peut alors corriger (lors d'une étape S5) le signal acquis par le capteur 4 d'images en enlevant la partie vibratoire ainsi intégrée.

Un traitement particulier traitera les débuts de la prise de vue et les trous de corrélation.

Le profil d'attitude de correction sera ensuite filtré en fréquence pour éviter de corriger des fréquences en dehors de la plage de restitution recherchée.

La mise en œuvre du procédé décrit dans l'exemple précédent (images satellites) s'applique à des images plus conventionnelles comme celles prises par exemple par un appareil de photographie ou encore un microscope.

EXEMPLE DE RESULTAT

Un procédé selon l'invention est avantageusement mis en œuvre pour certains satellites pour dévibrer les images, afin de sécuriser les performances de qualité image en vol, dans le cas où l'attitude du satellite serait perturbée par des phénomènes haute fréquence.

Les résultats de simulation donnent des performances largement satisfaisantes : pour des amplitudes de l'ordre de un pixel et la superposition de huit signaux constitués de deux fréquences principales de l'ordre de 50 et 80Hz, avec dérive des fréquences, mais peu de bruit en fréquence, un fort bruit de mesure lié aux corrélations d'images, avec trois décalages et six échantillons temporels, on obtient des erreurs de 0.1 pixel à 99.7% du temps.

**Revendications**

1. Procédé d'intégration pour obtenir un signal vibratoire harmonique issu d'un capteur (4) d'images monté sur un porteur (10), à partir d'au moins une mesure représentative d'une différentielle dudit signal vibratoire, ledit signal vibratoire étant composé de n pulsations $\omega_i$ stationnaires ou quasi-stationnaires connues, le procédé étant **caractérisé en ce qu'**il comporte les étapes selon lesquelles :

   - un intégrateur (2) intègre (S4) le signal vibratoire $\hat{x}(t)$ en effectuant une combinaison linéaire de m mesures $\Delta\hat{x}(t_k, \tau_j)$ pour chaque instant $t_k$ issues d'un module (1) de traitement des images issues du capteur (4), la combinaison linéaire étant de la forme :

$$\hat{x}(t) = \sum_{t_k \in I} \sum_{j=1}^{m} w_{jk} \cdot \Delta\hat{x}(t_k, \tau_j)$$

   où $m \leq 2n$ ;

   $t_k$ appartient à un intervalle I de temps incluant t dans lequel l'intervalle I est de la forme

$$I = \left[t - p'dt; t + pdt\right]$$

   où dt est le pas d'échantillonnage des mesures $\Delta\hat{x}(t_k, \tau_j)$ par le module (1) ;

   les intervalles [0 ;p'] et [0 ;p] sont inclus dans les nombres entiers naturels. ;

   les m mesures sont prises entre l'instant $t_k$ et des instants $t_k$ - $\tau_j$ distants de décalages temporels $\tau_y$ connus,

   chaque coefficient $w_{jk}$ de la combinaison linéaire est une fonction des pulsations $\omega_i$ connues, des décalages $\tau_j$ connus, et de la position de la mesure $\Delta\hat{x}(t_k, \tau_j)$ dans l'intervalle temporel I, et

   - le signal est considéré comme harmonique stationnaire, un calculateur (3) modélisant alors le signal à intégrer sous la forme :

$$\hat{y}(t) = \sum_{i=1}^{n} a_i \cdot \sin(\omega_i t + \varphi_i)$$

   où $a_i$ représente l'amplitude de la pulsation $\omega_i$, et $\varphi_i$ représente la phase de la pulsation $\omega_i$;

   le procédé comportant en outre une étape selon laquelle le calculateur (3) pose :

$$p'=p=0 \text{ et donc } t_k = t$$

## m=2n

le calculateur (3) calculant (S0) le vecteur w regroupant les coefficients $w_j$ de ladite combinaison linéaire par la formule :

$$\mathbf{w} = \left(\mathbf{B}(\omega,\tau)^{-1}\right)^{H} \cdot \boldsymbol{\alpha}$$

où : $(\mathbf{B}(\omega,\tau)^{-})^{H}$ est la matrice transposée de la matrice $\mathbf{B}(\omega, \tau)^{-1}$
$\mathbf{B}(\omega,\tau)^{-1}$ est l'inverse de la matrice $\mathbf{B}(\omega,\tau)$,
$\mathbf{B}(\omega,\tau)$ est une matrice carrée mxm de la forme :

$$\begin{pmatrix} 1-e^{-i\omega_1\tau_1} & \cdots & 1-e^{-i\omega_n\tau_1} & 1-e^{i\omega_1\tau_1} & \cdots & 1-e^{i\omega_n\tau_1} \\ \vdots & & \vdots & \vdots & & \vdots \\ 1-e^{-i\omega_1\tau_m} & \cdots & 1-e^{-i\omega_n\tau_m} & 1-e^{i\omega_1\tau_m} & \cdots & 1-e^{i\omega_n\tau_m} \end{pmatrix}$$

a est une matrice colonne de m lignes ayant un coefficient 1

$$\boldsymbol{\alpha} = \begin{pmatrix} 1 \\ \vdots \\ 1 \end{pmatrix}$$

2. Procédé d'intégration pour obtenir un signal vibratoire quasi-harmonique issu d'un capteur (4) d'images monté sur un porteur (10), à partir d'au moins une mesure représentative d'une différentielle dudit signal vibratoire, ledit signal vibratoire étant composé de n pulsations $\omega_i$, stationnaires ou quasi-stationnaires connues,
le procédé étant **caractérisé en ce qu'**il comporte les étapes selon lesquelles :

- un intégrateur (2) intègre (S4) le signal vibratoire $\hat{x}(t)$ en effectuant une combinaison linéaire de m mesures $\Delta\hat{x}(t_k,\tau_j)$ pour chaque instant $t_k$ issues d'un module (1) de traitement des images issues du capteur (4), la combinaison linéaire étant de la forme :

$$\hat{x}(t) = \sum_{t_k \in I} \sum_{j=1}^{m} w_{jk} \cdot \Delta\hat{x}(t_k, \tau_j)$$

où $m \le 2n$ ;
$t_k$ appartient à un intervalle I de temps incluant t dans lequel l'intervalle I est de la forme

$$I = \left[t - p'dt; t + pdt\right]$$

où dt est le pas d'échantillonnage des mesures $\Delta\hat{x}(t_k, \tau_j)$ par le module (1) ;
les intervalles [0 ;p'] et [0 ;p] sont inclus dans les nombres entiers naturels. ;
les m mesures sont prises entre l'instant $t_k$ et des instants $t_k$-$\tau_j$ distants de décalages temporels $\tau_j$ connus, chaque coefficient $w_{jk}$ de la combinaison linéaire est une fonction des pulsations $\omega_i$ connues, des décalages $\tau_j$ connus, et de la position de la mesure $\Delta\hat{x}(t_k, \tau_j)$ dans l'intervalle temporel I, et

- le signal est considéré comme quasi-harmonique et quasi-stationnaire, un calculateur (3) modélisant alors le signal à intégrer sous la forme :

$$\widehat{y}(t_k) = \sum_{i=1}^{n} (a_i + \varepsilon_a) \cdot \sin(\omega_i(t_k) \times t_k + \varphi_i)$$

où $(a_i + \varepsilon_a)$ représente l'amplitude de la pulsation $\omega_i$,
$\varphi_i$ représente sa phase, et

où le calculateur (3) pose :

$$\omega_i(t_k) = 2\pi \cdot (f_i + v_i(t_k) + \varepsilon_f)$$

où $\varepsilon_a$ et $\varepsilon_f$ sont des variables aléatoires de moyenne nulle et de distribution gaussiennes, d'écarts types respectifs $\sigma_f$ et $\sigma_h$, tirées à chaque instant $t_k$,
$v_i(t_k)$ représente la dérive temporelle de chaque fréquence $f_i$ ;

le calculateur (3) calculant (S0) le vecteur w regroupant les coefficients $w_{jk}$ de ladite combinaison linéaire, par la méthode des moindres carrés, par la formule :

$$\mathbf{w} = \mathbf{R}_{\Delta y}^{-1} \cdot \mathbf{r}_{\Delta y dy}$$

où $\mathbf{R}_{\Delta y}^{-1}$ est l'inverse de la matrice $\mathbf{R}_{\Delta y}$,

$\mathbf{R}_{\Delta y}$ est la matrice de variance-covariance de la matrice $\Delta\widehat{y}(t_k, \tau)$ regroupant les $m \times (p+p'+1)$ différentielles estimées, chacune étant de la forme :

$$\Delta\widehat{y}(t_k) = \widehat{y}(t_k) - \widehat{y}(t_k - \tau_j)$$

$\mathbf{r}_{\Delta y \cdot dy}$ est le vecteur de corrélation croisée entre $\widehat{y}(t_k)$ et $\Delta\widehat{y}(t_k, \tau)$.

3.  Procédé selon la revendication 2, dans lequel le calculateur (3) calcule $R_{\Delta y}$ et $\mathbf{r}_{\Delta y.dy}$ grâce aux formules :

$$\mathbf{R}_{\Delta y} = E_t\left[\Delta\widehat{y}(t_k, \tau) \cdot \Delta\widehat{y}(t_k, \tau)^H\right]$$

$$\mathbf{r}_{\Delta y \cdot dy} = E_t\left[\Delta\widehat{y}(t_k, \tau) \cdot \widehat{y}(t_k)\right]$$

où $E_t$ désigne l'espérance mathématique sur $t_k$.

4.  Procédé selon l'une des revendications 2 ou 3, dans lequel

    - le calculateur (3) supprime, dans la combinaison linéaire, les termes correspondant aux différentielles estimées $\Delta\widehat{y}(t_k, \tau_j)$ dont l'amplitude est inférieure à un seuil déterminé, et peut donc être considérée comme négligeable,
    - le calculateur (3) recalcule les coefficients de la combinaison linéaire ;
    - l'intégrateur (2) intègre le signal en utilisant les coefficients linéaires retenus.

5.  Procédé selon l'une des revendications 2 à 4, dans lequel le calculateur (3) simule le bruit de mesure en posant :

$$\Delta\widehat{y}(t_k, \tau_j) = \widehat{y}(t_k) - \widehat{y}(t_k - \tau_j) + \varepsilon_\Delta$$

où $\varepsilon_\Delta$ est de distribution gaussienne, de moyenne nulle et d'écart type $\sigma_\Delta$ tiré à chaque instant $t_k$.

6. Procédé selon l'une des revendications 2 à 5, dans lequel le calculateur (3) pose :

$$p' = p = 0$$

l'intégrateur (2) intégrant le signal à l'instant t.

7. Procédé selon l'une des revendications 2 à 6, dans lequel le calculateur (3) prend, pour effectuer (S0) les calculs des coefficients $w_{jk}$, des mesures disponibles avec des décalages obtenus à des temps proches du temps t sur l'intervalle /, avec

$$I = [t - p' \cdot dt; t + p \cdot dt]$$

pour améliorer la robustesse au bruit,
l'intégrateur (2) effectuant l'intégration sur l'intervalle I.

8. Procédé selon la revendication 7, dans lequel le calculateur pose p'=p.

9. Procédé selon l'une des revendications 5 à 8, dans lequel le module (1) fournit les mesures $\Delta\hat{x}(t_k, \tau_j)$ de sorte que le plus petit décalage $\tau_j$ soit :

$$\tau_j > \frac{3\sigma_\Delta}{\sum\limits_{i=1}^{n} a_i \omega_i}$$

10. Procédé selon l'une des revendications 5 à 9, dans lequel le module (1) fournit les mesures $\Delta\hat{x}(t_k, \tau_j)$ de sorte que les décalages temporels $\tau_j$ soient tels que les fréquences $f_i$ puissent être considérées comme quasi-stationnaires entre $t\text{-}T_j$ et t.

11. Procédé selon l'une des revendications 2 à 10, dans lequel l'intégrateur (2) effectue (S4') un centrage du signal vibratoire avant d'appliquer (S4) les coefficients $w_{jk}$ pour obtenir un signal de moyenne nulle.

12. Procédé selon l'une des revendications 2 à 11, dans lequel l'intégrateur (2) effectue (S6') un filtrage sur le signal $\hat{x}(t)$, pour éliminer des fréquences peu observables.

13. Procédé selon l'une des revendications 2 à 12, dans lequel l'intégrateur (2) effectue (S6") un rephasage global du signal vibratoire $\hat{x}(t)$ par minimisation d'erreur quadratique moyenne entre les mesures $\Delta\hat{x}(t_k, \tau_j)$ et des différentielles estimées $\hat{x}(t) - \hat{x}(t - \tau_j)$.

14. Procédé selon l'une des revendications 5 à 13, dans lequel l'intégrateur (2) effectue (S6''') une itération de la forme :

1. $\Delta\hat{x}(t_k, \tau_j)$ = mesure initiale
2. $\hat{x}(t_k) = \mathbf{w}^H.(\Delta\hat{x}(t_k, \tau))$
Puis, tant que $\Delta\hat{x}(t_k, \tau_j) > 3\sigma_\Delta$, $\forall j \in [1, m]$
3. $\Delta\hat{x}(t_k, \tau_j) \Leftarrow \Delta\hat{x}(t_k, \tau_j) - (\hat{x}(t_k) - x(t_k - \tau_j))$
4. $\hat{x}(t_k) \Leftarrow \hat{x}(t_k) + \mathbf{w}^H.(\Delta\hat{x}(t_k, \tau))$

15. Procédé de correction, à un instant t, de la partie vibratoire d'un signal acquis par un capteur (4) d'images monté sur un porteur (10),

le capteur (4) comportant une pluralité de pixels (40),
la partie vibratoire étant sous forme d'un signal vibratoire harmonique ou quasi-harmonique composé de n pulsations $\omega_i$ stationnaires ou quasi-stationnaires connues,

les $\omega_i$ étant fonction des propriétés vibratoires du porteur (10), ledit procédé étant **caractérisé en ce qu'**il comporte les étapes selon lesquelles :

- le capteur (4) acquiert (S1) m couples d'images d'une même scène, avec $1 \leq m \leq 2n$,

une image de chaque couple étant acquise à un instant ($t_k$) appartenant à un intervalle I de temps incluant t, et

l'autre image du couple étant acquise à un instant ($t_k$-$\tau_j$) distant d'un décalage temporel $\tau_j$ connu qui est fonction des propriétés géométriques du capteur (4) et/ou d'un déplacement du porteur (10),

- un module (1)

Calcule (S2), par corrélation à l'instant ($t_k$) entre les images de chaque couple, m différences spatiales d'alignement de la scène entre les pixels des images de chaque couple, et

Transforme (S3), grâce à un modèle géométrique, lesdites différences spatiales d'alignement en m différentielles d'attitude du porteur (10) $\Delta\hat{x}(t_k,\tau_j)$ prises entre l'instant $t_k$ et l'instant ($t_k$-$\tau_j$),

- un intégrateur (2) intègre (S4) le signal vibratoire $\hat{x}(t)$ en effectuant une combinaison linéaire des mx(p+p'+1) différentielles $\Delta\hat{x}(t_k,\tau_j)$ issues du module (1) pour les instants $t_k$, la combinaison linéaire étant de la forme :

$$\hat{x}(t) = \sum_{t_k \in I} \sum_{j=1}^{m} w_{jk} \cdot \Delta\hat{x}(t_k, \tau_j)$$

chaque coefficient $w_{jk}$ de la combinaison linéaire étant une fonction des pulsations $\omega i$ connues, des décalages $\tau_j$ connus, et de la position de la mesure $\Delta\hat{x}(t_k,\tau_j)$ dans l'intervalle temporel I, l'étape d'intégration du signal vibratoire par l'intégrateur (2) s'effectuant selon l'une des revendications 1 à 14;

- un correcteur (5) corrige (S5) le signal acquis par le capteur (4) d'images en enlevant la partie vibratoire ainsi intégrée.

16. Procédé selon la revendication 15, dans lequel la correction de la partie vibratoire s'effectue pour chaque instant t et peut donc suivre en temps réel les variations des vibrations du porteur (10).

17. Procédé selon l'une des revendications 15 ou 16, dans lequel le capteur (4) comporte une pluralité de barrettes.

18. Procédé selon l'une des revendications 15 à 17, dans lequel le capteur comporte une matrice (M) de détection.

19. Procédé selon l'une des revendications 15 à 18, dans lequel le porteur (10) est un satellite artificiel.

20. Procédé selon l'une des revendications 15 à 18, dans lequel le porteur (10) est quasi-statique par rapport à une scène à observer, préférentiellement du type microscope.


**Patentansprüche**

1. Integrationsverfahren zum Erhalten eines harmonischen Vibrationssignals, das aus einem Bildsensor (4) stammt, der auf einem Träger (10) montiert ist, aus mindestens einer repräsentativen Messung einer Differenz des Vibrationssignals, wobei sich das Vibrationssignal aus n bekannten stationären oder quasi-stationären Pulsationen $\omega_i$ zusammensetzt,

wobei das Verfahren **dadurch gekennzeichnet ist, dass** es die Schritte beinhaltet, wonach:

- ein Integrator (2) das Vibrationssignal $\hat{x}(t)$ integriert (S4), indem er eine Linearkombination von m Messungen $\Delta\hat{x}(t_k,\tau_j)$ für jeden Moment $t_k$ durchführt, die aus einem Verarbeitungsmodul (1) der Bilder stammen, die aus dem Sensor (4) stammen, wobei die Linearkombination in der folgenden Form ist:

$$\hat{x}(t) = \sum_{t_k \in I} \sum_{j=1}^{m} w_{jk} \cdot \Delta\hat{x}(t_k, \tau_j)$$

wobei m $\leq$ *2n* ist;

$t_k$ einem Zeitintervall I angehört, das t einschließt, wobei das Intervall I in der folgenden Form ist

$$I = \left[t - p'dt; t + pdt\right]$$

wobei dt der Stichprobenahme-Schritt der Messungen $\Delta\hat{x}(t_k, \tau_j)$ durch das Modul (1) ist;

die Intervalle [0; p'] und [0; p] in den natürlichen ganzen Zahlen eingeschlossen sind.

die m Messungen zwischen dem Moment $t_k$ und Momenten $t_k$-$\tau_j$ erfolgen, die um bekannte Zeitver-schiebungen $\tau_j$ beabstandet sind,

jeder Koeffizient wj$_k$ der Linearkombination eine Funktion der bekannten Pulsationen $\omega_i$, der bekannten Verschiebungen $\tau_j$ und der Position der Messung $\Delta\hat{x}(t_k, \tau j)$ in dem Zeitintervall I ist, und

- das Signal als harmonisch stationär angesehen wird, wobei ein Rechner (3) somit das zu integrierende Signal in der folgenden Form modelliert:

$$\hat{y}(t) = \sum_{i=1}^{n} a_i \cdot \sin(\omega_i t + \varphi_i)$$

wobei *a$_i$* die Amplitude der Pulsation $\omega_i$ repräsentiert und $\varphi_i$ die Phase der Pulsation $\omega_i$ repräsentiert;

wobei das Verfahren weiter einen Schritt beinhaltet, wonach der Rechner (3) Folgendes ansetzt:

p'=p=0 und somit $t_k$=t

m=2n

wobei der Rechner (3) den Vektor **w** berechnet (S0), der die Koeffizienten *wj* der Linearkombination durch die folgende Formel zusammenfasst:

$$\mathbf{w} = \left(\mathbf{B}(\omega, \tau)^{-1}\right)^{H} \cdot \boldsymbol{\alpha}$$

wobei: $(B(\omega,\tau)^{-1})^H$ die transponierte Matrix der Matrix $\mathbf{B}(\omega,\tau)^{-1}$ ist

$\mathbf{B}(\omega,\tau)^{-1}$ der Kehrwert der Matrix $\mathbf{B}(\omega,\tau)$ ist,

$\mathbf{B}(\omega,\tau)$ eine quadratische Matrix m x m der folgenden Form ist:

$$\begin{pmatrix} 1-e^{-i\omega_1\tau_1} & \cdots & 1-e^{-i\omega_n\tau_1} & 1-e^{i\omega_1\tau_1} & \cdots & 1-e^{i\omega_n\tau_1} \\ \vdots & & \vdots & \vdots & & \vdots \\ 1-e^{-i\omega_1\tau_m} & \cdots & 1-e^{-i\omega_n\tau_m} & 1-e^{i\omega_1\tau_m} & \cdots & 1-e^{i\omega_n\tau_m} \end{pmatrix}$$

$\alpha$ eine Säulenmatrix mit m Zeilen ist, die einen Koeffizienten 1 aufweist

$$\boldsymbol{\alpha} = \begin{pmatrix} 1 \\ \vdots \\ 1 \end{pmatrix}$$

**2.** Integrationsverfahren zum Erhalten eines quasi-harmonischen Vibrationssignals, das aus einem Bildsensor (4) stammt, der auf einem Träger (10) montiert ist, aus mindestens einer repräsentativen Messung einer Differenz des Vibrationssignals, wobei sich das Vibrationssignal aus n bekannten stationären oder quasi-stationären Pulsationen

$\omega_i$ zusammensetzt,

wobei das Verfahren **dadurch gekennzeichnet ist, dass** es die Schritte beinhaltet, wonach:

- ein Integrator (2) das Vibrationssignal $\hat{x}(t)$ integriert (S4), indem er eine Linearkombination von m Messungen $\Delta\hat{x}(t_k, \tau_j)$ für jeden Moment $t_k$ durchführt, die aus einem Verarbeitungsmodul (1) der Bilder stammen, die aus dem Sensor (4) stammen, wobei die Linearkombination in der folgenden Form ist:

$$\hat{x}(t) = \sum_{t_k \in I} \sum_{j=1}^{m} w_{jk} \cdot \Delta\hat{x}(t_k, \tau_j)$$

wobei m $\leq$ *2n* ist;

$t_k$ einem Zeitintervall I angehört, das t einschließt, wobei das Intervall I in der folgenden Form ist

$$I = \left[ t - p'dt; t + pdt \right]$$

wobei dt der Stichprobenahme-Schritt der Messungen $\Delta\hat{x}(t_k, \tau_j)$ durch das Modul (1) ist;
die Intervalle [0; p'] und [0; p] in den natürlichen ganzen Zahlen eingeschlossen sind;
die m Messungen zwischen dem Moment $t_k$ und den Momenten $t_k$-$\tau_j$ erfolgen, die um bekannte Zeit-verschiebungen $\tau_j$ beabstandet sind,

jeder Koeffizient $w_{jk}$ der Linearkombination eine Funktion der bekannten Pulsationen $\omega_i$, der bekannten Verschiebungen $\tau_j$ und der Position der Messung $\Delta\hat{x}(t_k, \tau_j)$ in dem Zeitintervall I ist, und

- das Signal als quasi-harmonisch und quasi-stationär angesehen wird, wobei ein Rechner (3) somit das zu integrierende Signal in der folgenden Form modelliert:

$$\hat{y}(t_k) = \sum_{i=1}^{n} (a_i + \varepsilon_a) \cdot \sin\left(\omega_i(t_k) \times t_k + \varphi_i\right)$$

wobei $(a_i + \varepsilon_a)$ die Amplitude der Pulsation $\omega_i$ repräsentiert,
$\varphi_i$ ihre Phase repräsentiert, und

wobei Rechner (3) Folgendes ansetzt:

$$\omega_i(t_k) = 2\pi \cdot (f_i + \nu_i(t_k) + \varepsilon_f)$$

wobei $\varepsilon_a$ und $\varepsilon f$ zufällige Variable einer Gauß-Verteilung mit Null-Mittelwert mit jeweiligen typischen Ab-weichungen $\sigma_f$ und $\sigma_h$ ist, die in jedem Moment $t_k$ gezogen werden,
$\nu_i(t_k)$ eine zeitliche Abdrift jeder Frequenz $f_i$ repräsentiert;

wobei der Rechner (3) den Vektor w berechnet (S0), der die Koeffizienten $w_{jk}$ der Linearkombination durch das Verfahren der kleinsten Quadrate durch die folgende Formel zusammenfasst:

$$\mathbf{w} = \mathbf{R}_{\Delta y}^{-1} \cdot \mathbf{r}_{\Delta y dy}$$

wobei $\mathbf{R}_{\Delta y}^{-1}$ der Kehrwert der Matrix $\mathbf{R}_{\Delta y}$ ist,
$\mathbf{R}_{\Delta y}$ die Varianz-Kovarianz-Matrix der Matrix $\Delta\hat{y}(t_k, \tau)$ ist, die die geschätzten Differenzen m x (p+p'+1) zusammenfasst, wobei jede in der folgenden Form ist:

$$\Delta\hat{y}(t_k) = \hat{y}(t_k) - \hat{y}(t_k - \tau_j)$$

$r\triangle_{y.dy}$ der gekreuzte Korrelationsvektor zwischen $\widehat{y}(t_k)$ und $\Delta\widehat{y}(t_k,\tau)$

3. Verfahren nach Anspruch 2, wobei der Rechner (3) $R\triangle_y$ und $r\triangle_{y.dy}$ dank der folgenden Formeln berechnet:

$$\mathbf{R}_{\Delta y} = E_t\left[\Delta\widehat{y}(t_k,\tau)\cdot\Delta\widehat{y}(t_k,\tau)^H\right]$$

$$\mathbf{r}_{\Delta y\cdot dy} = E_t\left[\Delta\widehat{y}(t_k,\tau)\cdot\widehat{y}(t_k)\right]$$

wobei Et den Erwartungswert in $t_k$ bezeichnet.

4. Verfahren nach einem der Ansprüche 2 oder 3, wobei

- der Rechner (3) in der Linearkombination die Termini löscht, die den geschätzten Differenzen $\Delta\widehat{y}(t_k,\tau_j)$ entsprechen, deren Amplitude kleiner als ein bestimmter Schwellenwert ist, und somit als vernachlässigbar angesehen werden kann,
- der Rechner (3) die Koeffizienten der Linearkombination neu berechnet;
- der Integrator (2) das Signal integriert, indem er die gehaltenen Koeffizienten verwendet.

5. Verfahren nach einem der Ansprüche 2 bis 4, wobei der Rechner (3) das Messrauschen simuliert, indem er Folgendes ansetzt:

$$\Delta\widehat{y}(t_k,\tau_j) = \widehat{y}(t_k) - \widehat{y}(t_k - \tau_j) + \varepsilon_\Delta$$

wobei $\varepsilon\Delta$ die Gauß-Verteilung mit Null-Mittelwert und typischer Abweichung $\sigma\Delta$ ist, die in jedem Moment $t_k$ gezogen wird.

6. Verfahren nach einem der Ansprüche 2 bis 5, wobei der Rechner (3) Folgendes ansetzt:

$$p'=p=0$$

wobei der Integrator (2) das Signal im Moment t integriert.

7. Verfahren nach einem der Ansprüche 2 bis 6, wobei der Rechner (3) zur Durchführung (S0) der Berechnungen der Koeffizienten $w_{jk}$ verfügbare Messungen mit den Verschiebungen durchführt, die zu den Zeiten nahe der Zeit $t$ im Intervall / erhalten werden, mit

$$I = [t - p'\cdot dt; t + p\cdot dt]$$

um die Rauschunempfindlichkeit zu verbessern,
wobei der Integrator (2) die Integration im Intervall I durchführt.

8. Verfahren nach Anspruch 7, wobei der Rechner p'=p ansetzt.

9. Verfahren nach einem der Ansprüche 5 bis 8, wobei das Modul (1) die Messungen $\Delta\widehat{x}(t_k,\tau_j)$ bereitstellt, sodass die kleinste Verschiebung $\tau_j$ lautet:

$$\tau_j > \frac{3\sigma_\Delta}{\displaystyle\sum_{i=1}^{n} a_i \omega_i}$$

**10.** Verfahren nach einem der Ansprüche 5 bis 9, wobei das Modul (1) die Messungen $\Delta\hat{x}(t_k, \tau_j)$ bereitstellt, sodass die Zeitverschiebungen $\tau_j$ derart sind, dass die Frequenzen $f_i$ zwischen $t - \tau_j$ und $t$ als quasi-stationär angesehen werden können.

**11.** Verfahren nach einem der Ansprüche 2 bis 10, wobei der Integrator (2) vor dem Anwenden (S4) der Koeffizienten $w_{jk}$ eine Zentrierung des Vibrationssignals durchführt (S4'), um ein Signal mit Null-Mittelwert zu erhalten.

**12.** Verfahren nach einem der Ansprüche 2 bis 11, wobei der Integrator (2) eine Filterung am Signal $\hat{x}(t)$ durchführt (S6'), um wenig beobachtbare Frequenzen zu eliminieren.

**13.** Verfahren nach einem der Ansprüche 2 bis 12, wobei der Integrator (2) einen globalen Phasenausgleich des Vibrationssignals $\hat{x}(t)$ durch Minimieren des mittleren quadratischen Fehlers zwischen den Messungen $\Delta\hat{x}(t_k, \tau_j)$ und den geschätzten Differenzen $\hat{x}(t) - \hat{x}(t - \tau_j)$ durchführt (S6").

**14.** Verfahren nach einem der Ansprüche 5 bis 13, wobei der Integrator (2) eine Iteration der folgenden Form durchführt (S6'''):

1. $\Delta\hat{x}(t_k, \tau_j) =$ ursprüngliche Messung
2. $\hat{x}(t_k) = w^H \cdot (\Delta\hat{x}(t_k, \tau))$
Danach, sofern $\Delta\hat{x}(t_k, \tau_j) > 3\sigma_\Delta, \ \forall j \in [1, m]$ ist
3. $\Delta\hat{x}(t_k, \tau_j) \Leftarrow \Delta\hat{x}(t_k, \tau_j) - (\hat{x}(t_k) - \hat{x}(t_k - \tau_j))$
4. $\hat{x}(t_k) \Leftarrow \hat{x}(t_k) + w^H \cdot (\Delta\hat{x}(t_k, \tau))$

**15.** Verfahren zum Korrigieren, in einem Moment $t$, des Vibrationsteils eines Signals, das durch einen Bildsensor (4) erfasst wird, der auf einem Träger (10) montiert ist,
wobei der Sensor (4) eine Vielzahl von Pixeln (40) beinhaltet,
wobei das Vibrationsteil in Form eines harmonischen oder quasi-harmonischen Vibrationssignals, das sich aus n bekannten stationären oder quasi-stationären Pulsationen $\omega_i$ zusammensetzt, ist,
wobei die $\omega_i$ von den Vibrationseigenschaften des Trägers (10) abhängig sind,
wobei das Verfahren **dadurch gekennzeichnet ist, dass** es die Schritte beinhaltet, wonach:

- der Sensor (4) m Bildpaare einer selben Szene erfasst (S1), mit $1 \leq m \leq 2n$,
wobei ein Bild eines jeden Paares in einem Moment ($t_k$) erfasst wird, der einem Zeitintervall I angehört, das $t$ einschließt, und
das andere Paar des Paares in einem Moment ($t_k - \tau_j$) erfasst wird, der um eine bekannte Zeitverschiebung $\tau_j$ beabstandet ist, die von den geometrischen Eigenschaften des Sensors (4) und/oder einem Versatz des Trägers (10) abhängig ist
- ein Modul (1)
durch Korrelation in dem Moment ($t_k$) zwischen den Bildern eines jeden Paares m räumliche Ausrichtunterschiede der Szene zwischen den Pixeln der Bilder eines jeden Paares berechnet (S2), und
dank eines geometrischen Modells die räumlichen Ausrichtunterschiede in m Lagedifferenzen des Trägers (10) $\Delta\hat{x}(t_k, \tau_j)$, die zwischen dem Moment $t_k$ und dem Moment ($t_k - \tau_j$) angenommen werden, umwandelt (S3),
- ein Integrator (2) das Vibrationssignal $\hat{x}(t)$ integriert (S4), indem er eine Linearkombination der m x (p+p'+1) Differenzen $\Delta\hat{x}(t_k, \tau_j)$, die aus dem Modul (1) stammen, für die Moment $t_k$ durchführt, wobei die Linearkombination in der folgenden Form ist:

$$\hat{x}(t) = \sum_{t_k \in I} \sum_{j=1}^{m} w_{jk} \cdot \Delta\hat{x}(t_k, \tau_j)$$

wobei jeder Koeffizient $w_{jk}$ der Linearkonfiguration eine Funktion der bekannten Pulsationen $\omega_i$, der bekannten Verschiebungen $\tau_j$ und der Position der Messung $\Delta\hat{x}(t_k, \tau_j)$ in dem Zeitintervall I ist, wobei der Integrationsschritt des Vibrationssignals durch den Integrator (2) nach einem der Ansprüche 1 bis 14 durchgeführt wird;
- ein Korrektor (5) das durch den Bildsensor (4) erfasste Signal korrigiert (S5), indem er das so integrierte Vibrationsteil entfernt.

16. Verfahren nach Anspruch 15, wobei die Korrektur des Vibrationsteils für jeden Moment t durchgeführt wird, und somit in Echtzeit den Vibrationen der Vibrationen des Trägers (10) folgen kann.

17. Verfahren nach einem der Ansprüche 15 oder 16, wobei der Sensor (4) eine Vielzahl von Bändern beinhaltet.

18. Verfahren nach einem der Ansprüche 15 bis 17, wobei der Sensor eine Detektionsmatrix (M) beinhaltet.

19. Verfahren nach einem der Ansprüche 15 bis 18, wobei der Träger (10) ein künstlicher Satellit ist.

20. Verfahren nach einem der Ansprüche 15 bis 18, wobei der Träger (10) in Bezug auf eine zu beobachtende Szene, vorzugsweise in der Art eines Mikroskops, quasi-statisch ist.

**Claims**

1. An integration method for obtaining a harmonic vibratory signal coming from an image sensor (4) mounted on a carrier (10), from at least one representative measurement of a differential of said vibratory signal, said vibratory signal being composed of n known stationary or quasi-stationary pulsations $\omega_i$,
the method being **characterized in that** it includes the steps according to which:

   - an integrator (2) integrates (S4) the vibratory signal $\hat{x}(t)$ by performing a linear combination of m measurements $\Delta\hat{x}(t_k, \tau_j)$ for each instant $t_k$ coming from a module (1) for processing images coming from the sensor (4), the linear combination being in the form:

$$\hat{x}(t) = \sum_{t_k \in I} \sum_{j=1}^{m} w_{jk} . \Delta\hat{x}(t_k, \tau_j)$$

   where $m \leq 2n$;
   $t_k$ belongs to an interval I of time including t in which the interval I is in the form:

$$I = [t - p'dt; t + pdt]$$

   where dt is the sampling pitch of the measurements $\Delta\hat{x}(t_k, \tau_j)$ by the module (1);
   the intervals [0 ;p'] and [0 ;p] are included in the natural integer numbers;
   the m measurements are taken between the instant $t_k$ and the instants $t_k$ - $\tau_j$ distant of known time lags $\tau_j$,

   each coefficient $w_{jk}$ of the linear combination is a function of the known pulsations $\omega_i$, the known lags $\tau_j$, and the position of the measurement $\Delta\hat{x}(t_k, \tau_j)$ over the temporal interval I, and

   - the signal is considered as stationary harmonic, a calculator (3) then modeling the signal to be integrated in the form:

$$\hat{y}(t) = \sum_{i=1}^{n} a_i . sin(\omega_i t + \varphi_i)$$

   where $a_i$ represents the amplitude of the pulsation $\omega_i$, and $\varphi_i$ represents the phase of the pulsation $\omega_i$;
   the method further including a step according to which the calculator (3) sets:

$$p' = p = 0 \text{ and therefore } t_k = t;$$

$$m = 2n$$

the calculator (3) calculating (S0) the vector w regrouping the coefficients $w_j$ of said linear combination by the formula:

$$\mathbf{w} = (\mathbf{B}(\omega, \tau)^{-1})^H. \, \alpha$$

where: $(\mathbf{B}(\omega, \tau)^{-1})^H$ is the transposed matrix of the matrix $\mathbf{B}(\omega, \tau)^{-1}$

$\mathbf{B}(\omega, \tau)^{-1}$ is the inverse of the matrix $\mathbf{B}(\omega, \tau)$

$\mathbf{B}(\omega, \tau)$ is a square matrix mxm in the form:

$$\begin{pmatrix} 1 - e^{-i\omega_1\tau_1} & \cdots & 1 - e^{-i\omega_n\tau_1} & 1 - e^{i\omega_1\tau_1} & \cdots & 1 - e^{i\omega_n\tau_1} \\ \vdots & & \vdots & \vdots & & \vdots \\ 1 - e^{-i\omega_1\tau_m} & \cdots & 1 - e^{-i\omega_n\tau_m} & 1 - e^{i\omega_1\tau_m} & \cdots & 1 - e^{i\omega_n\tau_m} \end{pmatrix}$$

$\alpha$ is a column matrix of m rows having a coefficient of 1

$$\alpha = \begin{pmatrix} 1 \\ \vdots \\ 1 \end{pmatrix}$$

2. The integration method for obtaining a quasi-harmonic vibratory signal coming from an image sensor (4) mounted on a carrier (10), from at least one representative measurement of a differential of said vibratory signal, said vibratory signal being composed of n known stationary or quasi-stationary pulsations $\omega_i$, the method being **characterized in that** it includes the steps according to which:

- an integrator (2) integrates (S4) the vibratory signal $\hat{x}(t)$ by performing a linear combination of m measurements $\Delta\hat{x}(t_k,\tau_j)$ for each instant $t_k$ coming from a module (1) for processing images coming from the sensor (4), the linear combination being in the form:

$$\hat{x}(t) = \sum_{t_k \in I} \sum_{j=1}^{m} w_{jk} . \Delta\hat{x}(t_k, \tau_j)$$

where $m \leq 2n$;

$t_k$ belongs to an interval I of time including t in which the interval I is in the form:

$$I = [t - p'dt; t + pdt]$$

where dt is the sampling pitch of the measurements $\Delta\hat{x}(t_k,\tau_j)$ by the module (1);

the intervals [0 ;p'] and [0 ;p] are included in the natural integer numbers;

the m measurements are taken between the instant $t_k$ and the instants $t_k - \tau_j$ distant of known time lags $\tau_j$,

each coefficient $w_{jk}$ of the linear combination is a function of the known pulsations $\omega_i$, the known lags $\tau_j$, and the position of the measurement $\Delta\hat{x}(t_k,\tau_j)$ over the temporal interval I, and

- the signal is considered as quasi-harmonic and quasi-stationary, a calculator (3) then modeling the signal to be integrated in the form:

$$\hat{y}(t) = \sum_{i=1}^{n}(a_i + \varepsilon_a).\sin(\omega_i(t_k) \times t_k + \varphi_i)$$

where $(a_i + \varepsilon_a)$ represents the amplitude of the pulsation $\omega_i$,
$\varphi_i$ represents its phase, and

where the calculator (3) sets:

$$\omega_i(t_k) = 2\pi.(f_i + \nu_i(t_k) + \varepsilon_f)$$

where $\varepsilon_a$ and $\varepsilon_f$ are random variables with a zero mean and a Gaussian distribution, with respective standard deviations $\sigma_f$ and $\sigma_h$ drawn at each instant $t_k$,
$\nu_i(t_k)$ represents the temporal drift of each frequency $f_i$;

the calculator (3) calculating (S0) the vector w regrouping the coefficients $w_{jk}$ of said linear combination, by the least squares method, by the formula:

$$\mathbf{w} = \mathbf{R}_{\Delta y}^{-1}.\mathbf{r}_{\Delta ydy}$$

where $\mathbf{R}_{\Delta y}^{-1}$ is the inverse of the matrix $\mathbf{R}_{\Delta y}$,
$\mathbf{R}_{\Delta y}$ is the variance-covariance matrix of the matrix $\Delta\hat{\mathbf{y}}(t_k, \tau)$ regrouping the estimated differential mx(p+p'+1), each being in the form:

$$\Delta\hat{\mathbf{y}}(t_k) = \hat{\mathbf{y}}(t_k) - \hat{\mathbf{y}}(t_k - \tau_j),$$

$\mathbf{r}_{\Delta ydy}$ is the cross correlation vector between $\hat{y}(t_k)$ and $\Delta\hat{y}(t_k, \tau)$.

3. The method according to claim 2, wherein the calculator (3) calculates $\mathbf{R}_{\Delta y}$ and $\mathbf{r}_{\Delta ydy}$ thanks to the formulas

$$\mathbf{R}_{\Delta y} = E_t[\Delta\hat{y}(t_k, \tau).\Delta\hat{y}(t_k, \tau)^H],$$

$$\mathbf{r}_{\Delta y.dy} = E_t[\Delta\hat{y}(t_k, \tau).\hat{y}(t_k)]$$

where Et denotes the expected value on $t_k$.

4. The method according to any of claims 2 or 3, wherein

 - the calculator (3) removes, in the linear combination, the terms corresponding to the estimated differential $\Delta\hat{\mathbf{y}}(t_k, \tau_j)$ whose amplitude is lower than a certain threshold, and can therefore be considered negligible;
 - the calculator (3) recalculates the coefficients of the linear combination;
 - the integrator (2) integrates the signal by using the retained linear coefficients.

5. The method according to any of claims 2 to 4, wherein the calculator stimulates the measurement noise by setting:

$$\Delta\hat{y}(t_k, \tau_j) = \hat{y}(t_k) - \hat{y}(t_k - \tau_j) + \varepsilon_\Delta$$

where $\varepsilon_\Delta$ is of a Gaussian distribution, with a zero mean and a standard deviation $\sigma_\Delta$, drawn at each instant $t_k$.

6. The method according to any of claims 2 to 5, wherein the calculator sets:

$$p'=p=0$$

the integrator (2) integrating the signal at the instant t.

7. The method according to any of claims 2 to 6, wherein the calculator takes measurements available with lags obtained at times close to the time t over the interval I, to perform the calculations of the coefficients $w_{j_k}$, with

$$I = [t - p'dt; t + p.dt],$$

to improve the robustness to noise,
the integrator (2) performing the integration over the interval I.

8. The method according to claim 7, wherein the calculator sets p'=p.

9. The method according to any of claims 5 to 8, wherein the module (1) provides the measurements $\Delta \hat{x}(t_k, \tau_j)$ so that the smallest lag $\tau_j$ is:

$$\tau_j > \frac{3\sigma\Delta}{\sum_{i=1}^{n} ai\omega i}$$

10. The method according to any of claims 5 to 9, wherein the module (1) provides the measurements $\Delta \hat{x}(t_k, \tau_j)$ so that the time lags $\tau_j$ such as the frequencies $f_i$ can be considered as quasi-stationary between t - $\tau_j$ and t.

11. The method according to any of claims 2 to 10, wherein the integrator (2) performs (S4') a centering of the vibratory signal before applying (S4) the coefficients $w_{jk}$ to obtain a zero mean signal.

12. The method according to any of claims 2 to 11, wherein the integrator (2) performs (S6') a filtering on the signal $\hat{x}(t)$, to eliminate unobservable frequencies.

13. The method according to any of claims 2 to 12, wherein the integrator (2) performs (S6") an overall rephasing of the vibratory signal $\hat{x}(t)$ by minimization of the mean square error between the measurements $\Delta \hat{x}(t_k, \tau_j)$ and the estimated differential $\hat{x}(t) - \hat{x}(t - \tau_j)$.

14. The method according to any of claims 5 to 13, wherein the integrator (2) performs (S6''') an iteration in the form:

    1. $\Delta \hat{x}(t_k, \tau_j)$ = initial measurement
    2. $\hat{x}(t_k) = w^H.(\Delta \hat{x}(t_k, \tau))$
    Then, as long as $\Delta \hat{x}(t_k, \tau_j) > 3\sigma_\Delta, \forall j \in [1, m]$
    3. $\Delta \hat{x}(t_k, \tau_j) \Leftarrow \Delta \hat{x}(t_k, \tau_j) - (\hat{x}(t_k) - \hat{x}(t_k, \tau_j))$
    4. $\hat{x}(t_k) \Leftarrow \hat{x}(t_k) + w^H.(\Delta \hat{x}(t_k, \tau))$

15. A method of correcting, at instant t, the vibrating portion of a signal acquired by an image sensor (4) mounted on a carrier (10),
the sensor (4) including a plurality of pixels (40),
the vibrating portion being in the form of a harmonic or quasi-harmonic vibratory signal composed of n known stationary or quasi-stationary pulsations $\omega_i$,
the $\omega_i$ being a function of the vibratory properties of the carrier (10),
said method being **characterized in that** it includes the steps according to which:

    - the sensor (4) acquires (S1) m pairs of images of a same scene, with $1 \leq m \leq 2n$,
    an image of each pair being acquired at an instant ($t_k$) belonging to an interval I of time including t, and
    the other image of the pair being acquired at an instant ($t_k - \tau_j$) distant of a known time lag $\tau_j$, which is a function of the geometric properties of the sensor (4) and/or a displacement of the carrier (10);
    - a module (1)
    Calculates (S2), by correlation at the instant ($t_k$) between the images of each pair, m spatial differences of alignment of the scene between the pixels of the images of each pair, and
    Transforms (S3), thanks to a geometrical model, said spatial differences of alignment in m differential of attitude of the carrier (10) $\Delta \hat{x}(t_k, \tau_j)$ taken between the instant $t_k$ and the instant ($t_k - \tau_j$);

- an integrator (2) integrates (S4) the vibratory signal $\hat{x}(t)$ by performing a linear combination of the mx(p+p'+1) differentials $\Delta\hat{x}(t_k,\tau_j)$ coming from the module (1) for the instants $t_k$, the linear combination being in the form:

$$\hat{x}(t) = \sum_{t_k \in 1} \sum_{j=1}^{m} w_{jk} . \Delta\hat{x}(t_k, \tau_j)$$

each coefficient $w_{jk}$ of the linear combination being a function of the known pulsations $\omega_i$, the known lags $\tau_j$ and the position of the measurement $\Delta\hat{x}(t_k,\tau_j)$ in the temporal interval I, the step of integrating the vibratory signal by the integrator (2) is performed according to any of claims 1 to 14;
- a corrector (5) corrects (S5) the signal acquired by the image sensor (4) by removing the vibrating portion thus integrated.

16. The method according to claim 15, wherein the correction of the vibrating portion is performed for each instant t and thus can follow the variations of the vibrations of the carrier (10) in real time.

17. The method according to any of claims 15 or 16, wherein the sensor (4) includes a plurality of bars.

18. The method according to any of claims 15 to 17, wherein the sensor (4) includes a detection matrix (M).

19. A method according to any of claims 15 to 18, wherein the carrier (10) is an artificial satellite.

20. The method according to any of claims 15 to 18, wherein the carrier (10) is quasi-static with respect to a scene to be observed, preferentially of the microscope type.

FIG.1

FIG.2

FIG.3A

FIG.3B

FIG.4

FIG.5

## RÉFÉRENCES CITÉES DANS LA DESCRIPTION

**Documents brevets cités dans la description**

- FR 2899344